# EUROPÄISCHE PATENTSCHRIFT

(11) **EP 0 708 255 B1**
(45) Veröffentlichungstag und Bekanntmachung des Hinweises auf die Patenterteilung: **29.12.2004**
(21) Anmeldenummer: 95116554.7
(22) Anmeldetag: 20.10.1995
(51) Int. Cl.: F16B 12/00

(54) **Baugruppe mit einer demontierbaren Rastverbindung**
Modular unit with a demountable snap-in fastening
Unité modulaire avec verrouillage par encliquetage démontable

(30) Priorität: 20.10.1994 DE 9418403 U
(43) Veröffentlichungstag der Anmeldung: 24.04.1996
(73) Patentinhaber: SCHÜCO International KG, 33609 Bielefeld (DE)
(72) Erfinder: Diekmann, Bernd, Dipl.-Ing., D-33790 Hall/Westf. (DE); Stosch, Martin, Dipl.-Ing. Arch., D-32756 Detmond (DE)
(74) Vertreter: Stracke, Alexander, Dipl.-Ing.

(56) Entgegenhaltungen:
- DE-U- 29 517 115
- FR-A- 2 595 124
- US-A- 3 580 652
- US-A- 3 836 267
- US-A- 4 359 960
- US-A- 4 797 021
- US-A- 4 802 700
- US-A- 4 869 564

## Beschreibung

Die Erfindung betrifft eine Baugruppe, bei der zwei Bauteile mittels einer Rastverbindung demontierbar miteinander verbunden sind.

Bei den Bauteilen handelt es sich insbesondere um Möbelbauteile. Die zu verbindenden Bauteile sind Zusatzbauteile, wie Arbeitsplatten, Gestellaufsätze, Stützfüße und dergleichen, die beispielsweise an einem in sich steifen Rahmenuntergestell aus genuteten Aluminium-Strangpressprofilen angeordnet werden. Zu der Montage und zur Demontage sind Werkzeuge notwendig. Außerdem ist es nicht möglich, einen Toleranzausgleich zwischen parallel zueinander stehenden Verbindungsstellen zu gewährleisten.

Aus der US 4802700 ist eine Rastverbindung bekannt, die mit einem Bolzen ausgestattet ist, der mit einer umlaufenden Nut versehen ist, in die ein Sicherungsring eingreift, der sich mit seiner Außenfläche an einer angrenzenden, kreisförmigen Ausnehmung abstützt, die in dem umgebenden Bauteil angeordnet ist. Die den Bolzen aufnehmende Bohrung ist stufenförmig abgesetzt, da auch der Bolzen im Endbereich entsprechend abgesetzt ist. Die Bohrung ist mit einer Ringnut ausgestattet, die sich in Richtung zum freien Ende des eingesetzten Bolzens konisch erweitert. Diese Erweiterung ist aus Gründen der Funktion notwendig. Der verwendete Sicherungsring ist geteilt bzw. geschlitzt. Der Sicherungsring ist als Federring ausgebildet und aus einem Federstahl gefertigt. Zur Verrastung des Bolzens innerhalb der äußeren Hülse wird der Sicherungsring in die konische Erweiterung eingebracht. Dazu muss er jedoch verformt werden, das heißt sein Außendurchmesser muss auf den Innendurchmesser der Bohrung reduziert werden, so dass der Sicherungsring beim Einsetzen zunächst unter einer Vorspannung steht. Sobald jedoch die konische Erweiterung erreicht ist, wird diese Vorspannung aufgehoben. Beim Einschieben des Bolzens springt der Sicherungsring dann in die Ringnut des Bolzens. Der Bolzen wird dann entgegen der Einschubrichtung zurückgezogen, so dass der Sicherungsring in die Ringnut der Außenhülse eingreift. Da der Durchmesser der Ringnut kleiner ist als die konische Erweiterung, wird der Ring zusammengedrückt, das heißt der Durchmesser verkleinert sich auf den Außendurchmesser der Ringnut. Da der Sicherungsring unter Spannung steht, wird sinngemäß eine kraftschlüssige Verbindung geschaffen. Der Bolzen kann jedoch nach dem Zusammenfügen der Teile nicht mehr aus der Außenhülse herausgezogen werden, so dass diese Rastverbindung nicht demontierbar ist. Diese Verbindung kann nur durch Zerstörung eines der Bauteile gelöst werden. Darüber hinaus ist noch nachteilig, dass das mit der Außenhülse über den Bolzen zu verbindende Bauteil sich am Kopf des Bolzens abstützt. Durch das Zurückziehen des Bolzens ist es jedoch nicht mehr möglich, dass die miteinander verbundenen Bauteile spaltfrei aneinander liegen. Da jederzeit der Bolzen zurückgeschoben werden kann, ist die Verbindung nicht eindeutig fixiert. Dazu bedarf es dann noch eines weiteren Bauteiles, beispielsweise eines Abstandshalters zwischen den beiden Bauteilen.

Aus der US 4359960 ist eine Rastverbindung bekannt, bei der an Federzungen Rastnasen angeformt sind, die in einer Ausnehmung oder eine Nut des angrenzenden Teiles eingreifen. Es handelt sich dabei um eine Rastverbindung, die mit einem Kraftaufwand zu entriegeln ist.

In der FR 2595124 wird eine Schraubverbindung beschrieben, wobei ein mit Gewinde versehenes Element gegen Drehung gesichert werden soll. Dazu ist an der dem Gewinde abgewandten Seite eine Scheibe vorgesehen, die Zacken oder Flügel aufweist, die deformierbar sind. Diese Schraubverbindung ist nicht als Rastverbindung anzusehen.

In der US 4797021 wird ein Baukastensystem beschrieben, um aus einem Grundmodel verschiedene Möbel zusammenzusetzen. Es handelt sich hierbei um ein Stecksystem, so dass die einzelnen Bauelemente nicht miteinander verrastet werden.

Schließlich ist noch aus der DE 29517115 U1 ein Möbelbeschlag bekannt, der mit einem Rastelement ausgestattet ist.

Ausgehend von einem durch die US 4802700 vorbekannten Stand der Technik liegt der Erfindung die Aufgabe zugrunde, eine Baugruppe der eingangs näher beschriebenen Art so auszubilden, dass die zu verbindenden Bauteile ohne Zuhilfenahme von Werkzeugen miteinander zu verbinden und auch zu lösen sind, wobei diese Verbindung die Möglichkeit eines Toleranzausgleiches zwischen den parallelen Verbindungsstellen sicherstellt.

Die gestellte Aufgabe wird durch eine Baugruppe mit den Merkmalen des Anspruches 1 gelöst.

Zur Verbindung wird das mit dem Bolzen ausgestatte Befestigungselement zunächst in das erste Bauteil fest eingesetzt. Anschließend wird das zweite Bauteil auf den vorstehenden, die umlaufende Ringnut aufweisenden Bereich aufgestülpt. Da der elastisch verformbare Sicherungsring mit Spiel in die Ringnut eingesetzt ist, kann er sich soweit verformen, dass er in der Ringnut verschwindet. Sobald jedoch das zweite Bauteil soweit auf den Bolzen aufgeschoben ist, dass die Schrägfläche auf Höhe des Sicherungsringes liegt, springt er wieder nach außen. Dadurch ist das zweite Bauteil festgelegt. Die Schrägfläche liegt dann tangential oder etwa tangential zum im Querschnitt kreisrunden Sicherungsring. Durch die entspannte Position ist es dann nur möglich, mit einem gewissen Kraftaufwand das zweite Bauteil zu demontieren. Selbst wenn das zweite Bauteil hängend befestigt ist, fällt es nicht selbsttätig durch das Eigengewicht herunter.

In weiterer Ausgestaltung ist vorgesehen, dass die Bohrung des den Bolzen umgebenden Bauteils einen dem anderen Bauteil zugewandt liegenden, zu diesem Bauteil sich im Durchmesser vergrößernden konischen Bereich und einen diesem Bauteil abgewandt liegenden, zylindrischen Bereich aufweist, und dass die Schrägfläche den Übergangsbereich bildet. Durch die konische Ausgestaltung des einen Bereichs der Bohrung wird beim Aufstülpen des Bauteiles auf den Bolzen der Sicherungsring kontinuierlich verkleinert, so dass das Aufstülpen mit mäßigem Kraftaufwand möglich ist. Sobald die Schrägfläche in den Bereich der Ringnut kommt, entspannt sich der Sicherungsring.

Zur einfachen Montage und zur sicheren Festlegung des den Bolzen umgebenden Bauteils ist vorgesehen, dass der größte Durchmesser des konischen Bereichs der Bohrung zumindest so groß ist wie der Außendurchmesser des entspannten Sicherungsringes, und dass der kleinste Durchmesser des konischen Bereichs geringfügig größer ist als der Außendurchmesser des Bolzens.

Durch den Schrägungswinkel der hinterschnittenen Schrägfläche kann die Kraft zur Demontage beeinflusst oder variiert werden. Es ist vorgesehen, dass dieser Schrägungswinkel im Bereich zwischen 30° und 50° liegt. Es ist ferner vorgesehen, dass der größte Durchmesser des zylindrischen Bereichs mit dem größtem stirnseitigen Durchmesser des konischen Bereichs übereinstimmt oder annähernd übereinstimmt. Dadurch wird ein größerer Ringspalt zwischen dem Bolzen und dem diesen umgebenden Bauteil vermieden. In weiterer Ausgestaltung ist noch vorgesehen, dass das Befestigungselement mit dem Bolzen einstückig verbunden ist. Es ist jedoch auch denkbar, dass es lösbar mit dem Bolzen verbunden ist.

Anhand der beiliegenden Zeichnung wird die Erfindung noch näher erläutert.

Es zeigt:

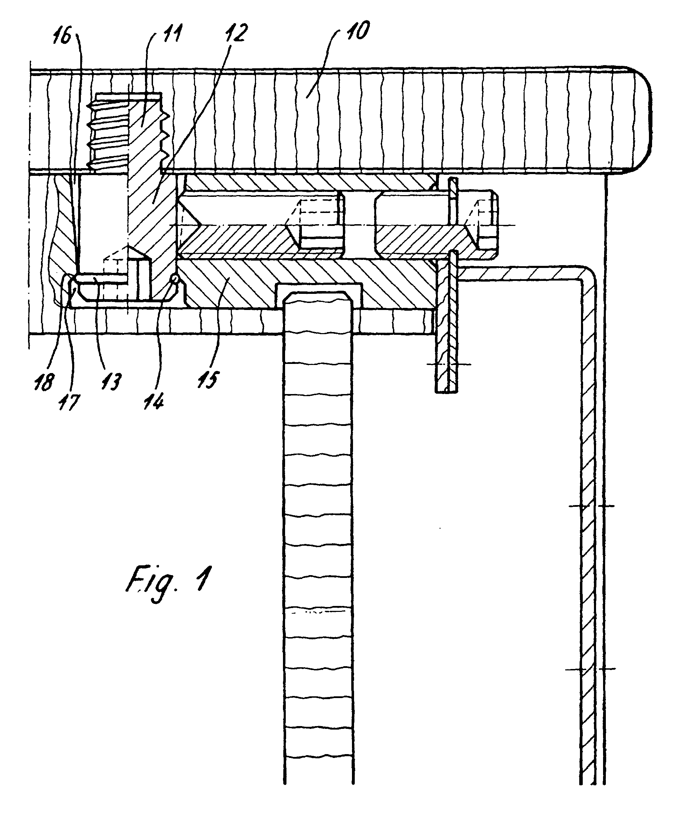

- Figur 1: Die Verbindung von zwei Bauteilen mittels der erfindungsgemäßen Rastverbindung in einem Teil-Vertikalschnitt.

In ein erstes Bauteil 10 in Form eines horizontalen Deckenteils ist ein als Gewindezapfen ausgebildetes Befestigungselement 11 eingedreht, welches mit einem Bolzen 12 fest bzw. einstückig verbunden ist. Der Außendurchmesser des Bolzens 12 ist im dargestellten Ausführungsbeispiel größer als der des Befestigungselementes 11. An dem dem Befestigungselement 11 gegenüberliegenden Stimende ist der Bolzen 12 mit einer umlaufenden Ringnut 13 versehen, in der ein elastisch verformbarer Sicherungsring 14 liegt. Der Bolzen 12 ist zylindrisch ausgebildet und hat einen konstanten Durchmesser über seine gesamte Länge. Das mit dem ersten Bauteil 10 zu verbindende, nicht näher erläuterte zweite Bauteil 15 ist mit einer durchgehenden Bohrung versehen, die aus drei Bereichen gebildet ist. Der dem ersten Bauteil 10 zugewandt liegende Bereich 16 ist konisch ausgebildet und vergrößert sich in Richtung zum stirnseitigen, dem ersten Bauteil 10 zugewandt liegenden Ende. Der gegenüberliegende, stirnseitige Bereich 17 ist zylindrisch ausgebildet. Der Durchmesser dieses Bereiches 17 stimmt mit dem größten Durchmesser des konischen Bereichs 16 überein. Der Übergangsbereich zwischen dem konischen Bereich 16 und dem zylindrischen Bereich 17 ist der Ringnut 13 bzw. dem Sicherungsring 14 zugeordnet und als Schrägfläche 18 ausgebildet. Der Schrägungswinkel liegt im dargestellten Ausführungsbeispiel bei ca. 45 Grad. Die Figur zeigt, daß der konische Bereich 16 relativ lang ist. Die Ringnut 13 ist so ausgelegt, daß der Sicherungsring 14 in der entspannten Lage, in der das zweite Bauteil 15 festgelegt ist, mit Spiel in der Ringnut 13 liegt. Wenn das zweite Bauteil 15 mit dem konischen Bereich 16 der Bohrung auf den Bolzen 12 aufgestülpt wird, verformt sich der Sicherungsring 14 so weit, daß er vollständig in der Ringnut 13 verschwindet. Die Entspannung erfolgt selbstätig, sobald die Schrägfläche 18 in den Bereich der Ringnut 13 gelangt. Durch das Durchmesserverhältnis des Bolzens 12 wird ein Toleranzausgleich zwischen den einzelnen Befestigungspunkten ermöglicht. Im Normalfall ist durch den relativ großen Schrägungswinkel der Schrägfläche 18 ein Lösen aufgrund des Eigengewichts des zweiten Bauteils 15 nicht möglich. Zur Demontage muß eine gewisse Federkraft überwunden werden. Diese Kraft kann durch den Schrägungswinkel der Schrägfläche 18 beeinflußt werden.

## Patentansprüche

1. Baugruppe, bei der zwei Bauteile (10, 15) mittels einer Rastverbindung demontierbar miteinander verbunden sind, die mit einem, einen Bolzen (12) aufweisenden, in eines der Bauteile (10) fest eingesetzten Befestigungselement (11) ausgestattet ist, und der Bolzen (12) in dem dem Befestigungselement (11) abgewandt liegenden Bereich mit einer umlaufenden Ringnut (13) versehen ist, in der ein elastischer Sicherungsring (14) eingreift, der sich mit seiner Außenfläche an einer angrenzenden, kreisförmigen Ausnehmung (17) abstützt, die in einem den Bolzen (12) umgebenden Bauteil (15) angeordnet ist, das zwecks einer Verformung des elastischem Sicherungsringes (14) beim Aufstülpen des umgebenden Bauteiles (15) auf den Bolzen (12) dieses Bauteil mit einer sich zur Ringnut (13) des Bolzens (12) verkleinernden Bohrung (16) derart versehen ist, dass der elastische Sicherungsring (14) beim Aufstülpen des den eintauchenden Bolzen (12) umgebenden Bauteils (15) in die Ringnut (13) gedrückt und anschließend entspannt eine die sich verkleinernde Bohrung (16) begrenzende Kante hintergreift.

2. Baugruppe nach Anspruch 1, **dadurch gekennzeichnet, dass** die Bohrung des den Bolzen (12) umgebenden Bauteils (15) an der dem damit verbundenen Bauteil (10) abgewandt liegenden, zylindrischen Bereich (17) aufweist, und dass zudem sich verkleinernden Bereich (16) eine Schrägfläche (18) den Übergangsbereich bildet.

3. Baugruppe nach Anspruch 2, **dadurch gekennzeichnet, dass** der größte Durchmesser des sich verkleinernden Bereiches (16) der Bohrung zumindest genauso groß ist wie der Außendurchmesser des entspannten Sicherungsringes (14), und dass der kleinste Durchmesser des sich verkleinernden Bereiches (16) der Bohrung des dem Bolzen (12) umgebenden Bauteils (15) geringfügig größer ist als der Durchmesser des Bolzens (12)

4. Baugruppe nach Anspruch 2, **dadurch gekennzeichnet, dass** der Schrägungswinkel der Schrägfläche (18) im Bereich zwischen 30° und 50° liegt.

5. Baugruppe nach einem oder mehreren der vorhergehenden Ansprüche 1 bis 4, **dadurch gekennzeichnet, dass** der Durchmesser des zylindrischen Bereiches (17) der Bohrung des dem Bolzen (12) umgebenden Bauteils (15) mit dem größten stirnseitigen Durchmesser des sich verkleinernden Bereiches (16) übereinstimmt oder annährend übereinstimmt.

6. Baugruppe nach einem oder mehreren der vorhergehenden Ansprüche 1 bis 5, **dadurch gekennzeichnet, dass** der Bolzen (12) mit einem Befestigungselement (11) fest oder lösbar verbunden oder einstückig ist, und dass das Befestigungselement (11) in das an dem Bolzen (12) angrenzende Bauteil (10) eindrehbar ist.

## Claims

1. Subassembly in which two components (10, 15) are connected to one another in a removable manner by means of a latching connection which is provided with a fastening element (11) having a bolt (12) and firmly inserted into one of the components (10), and the bolt (12), in the region which is remote from the fastening element (11), is provided with an encircling annular groove (13), in which an elastic locking ring (14) engages, which is supported with its outer surface on an adjoining, circular recess (17) which is arranged in a component (15) which surrounds the bolt (12) and which, for the purpose of deforming the elastic locking ring (14) when the surrounding component (15) is slipped onto the bolt (12), is provided with a hole (16), decreasing in size towards the annular groove (13) of the bolt (12), in such a way that the elastic locking ring (14), when the component (15) surrounding the plunging bolt (12) is being slipped on, is pressed into the annular groove (13) and then relaxes and engages behind an edge defining the hole (16) decreasing in size.

2. Subassembly according to Claim 1, **characterized in that** the hole of the component (15) surrounding the bolt (12) has a cylindrical region (17) remote from the component (10) connected thereto, and **in that** a sloping surface (18) forms the transition region to the region (16) decreasing in size.

3. Subassembly according to Claim 2, **characterized in that** the largest diameter of that region (16) of the hole which is decreasing in size is at least as large as the outside diameter of the relaxed locking ring (14), and **in that** the smallest diameter of that region (16) of the hole of the component (15) surrounding the bolt (12) which is decreasing in size is slightly larger than the diameter of the bolt (12).

4. Subassembly according to Claim 2, **characterized in that** the angle of slope of the sloping surface (18) is within a range of between 30° and 50°.

5. Subassembly according to one or more of the preceding Claims 1 to 4, **characterized in that** the diameter of the cylindrical region (17) of the hole of the component (15) surrounding the bolt (12) corresponds or approximately corresponds to the largest end diameter of the region (16) decreasing in size.

6. Subassembly according to one or more of the preceding Claims 1 to 5, **characterized in that** the bolt (12) is firmly or releasably connected to or is in one piece with a fastening element (11), and **in that** the fastening element (11) can be screwed into the component (10) adjoining the bolt (12).

## Revendications

1. Unité modulaire, dans laquelle deux composants (10, 15) sont assemblés l'un à l'autre de manière amovible par encliquetage, laquelle est munie d'un élément de fixation (11) muni d'un boulon (12) et inséré de manière fixe dans l'un des composants (10), et le boulon (12) dans la zone opposée à l'élément de fixation (11) comporte une rainure annulaire (13) périphérique, dans laquelle s'engage une bague de sécurité (14) élastique, qui est en appui avec sa face extérieure contre un évidement (17) circulaire adjacent, qui est réalisé dans un composant (15) entourant le boulon (12), lequel composant, en vue d'une déformation de la bague de sécurité (14) élastique au moment de l'emmanchement du composant (15) sur le boulon (12) à entourer, est muni d'un alésage (16) qui se rétrécit en direction de la rainure annulaire (13) du boulon (12), de telle sorte que, au moment de l'emmanchement du composant (15) entourant le boulon (12) engagé, la bague de sécurité (14) élastique dans la rainure annulaire (13), à l'état tendu puis détendu, s'engage derrière un bord délimitant l'alésage (16) se rétrécissant.

2. Unité modulaire selon la revendication 1, **caractérisée en ce que** la forure dans le composant (15) entourant le boulon (12) comporte une zone cylindrique (17) sur le côté écarté du composant (10) assemblé au dit composant (15) et **en ce qu'**une rampe (18) forme la zone de transition par rapport à la zone se rétrécissant (16).

3. Unité modulaire selon la revendication 2, **caractérisée en ce que** le plus grand diamètre de la zone (16) se rétrécissant dans l'alésage est au moins égal au diamètre extérieur de la bague de sécurité (14) à l'état détendu, et **en ce que** le plus petit diamètre de la zone se rétrécissant (16) dans l'alésage du composant (15) entourant le boulon (12) est légèrement supérieur au diamètre du boulon (12).

4. Unité modulaire selon la revendication 2, **caractérisée en ce que** l'angle d'inclinaison de la rampe (18) se situe dans la plage entre 30° et 50°.

5. Unité modulaire selon l'une quelconque des revendications 1 à 4, **caractérisée en ce que** le diamètre de la zone cylindrique (17) dans l'alésage du composant (15) entourant le boulon (12) coïncide ou coïncide approximativement avec le plus grand diamètre frontal de la zone se rétrécissant (16).

6. Unité modulaire selon l'une quelconque des revendications 1 à 5, **caractérisée en ce que** le boulon (12) est assemblé fermement ou de manière amovible ou est réalisé d'un seul tenant avec un élément de fixation (11) et **en ce que** l'élément de fixation (11) peut être introduit par rotation dans le composant (10) adjacent au boulon (12).
